# EUROPEAN PATENT SPECIFICATION

(11) **EP 3 917 446 B1**
(45) Date of publication and mention of the grant of the patent: **17.01.2024**
(21) Application number: 20701769.0
(22) Date of filing: 28.01.2020
(51) Int. Cl.: A61C 8/00

(54) **ABUTMENT ARRANGEMENT AND DENTAL RESTORATION KIT**
ABUTMENTANORDNUNG UND ZAHNRESTAURATIONSKIT
AGENCEMENT DE BUTÉE ET KIT DE RESTAURATION DENTAIRE

(30) Priority: 29.01.2019 EP 19154094; 16.12.2019 CH 16272019
(43) Date of publication of application: 08.12.2021
(73) Proprietor: Institut Straumann AG, 4052 Basel (CH)
(72) Inventor: FISCHLER, Felix, 68220 Hagenthal le Haut (FR); FISCHLER, Titus, 4314 Zeiningen (CH)
(74) Representative: Michalski Hüttermann & Partner Patentanwälte mbB
(86) International application number: PCT/EP2020/052006
(87) International publication number: WO 2020/157045

(56) References cited:
- WO-A1-2018/060194
- FR-A1- 3 062 052

## Description

### Technical Field

The present invention relates to an abutment arrangement according to the preamble of independent claim 1 and more particularly to a dental restoration kit having such an abutment arrangement. Such devices and methods can be used to connect a dental restoration to a dental implant.

### Background Art

Today, often damaged or lost teeth are replaced by artificial teeth comprised by dental restorations such as bridges, crowns or the like. Thereby, the dental restorations are placed either on remainders of original teeth or on implants set as artificial roots into jaw bones. Known dental restorations usually are made of materials which meet specific requirements such as biocompatibility, robustness, longevity and the like. For example, in non-exposed sections of the mouth metal dental restorations, e.g. made of gold or zirconium, are often used. In sections of the mouth being visible, usually other materials are preferred which optically better suit to the appearance of natural teeth. For example, ceramic materials, composite materials, fiber-reinforced composites or acrylic glasses (Polymethylmethacrylate - PMMA) are commonly used.

As mentioned, the materials of crows are typically chosen in consideration of the requirements for being used as teeth such aesthetic requirements, mechanical conditions and the like. However, for being directly placed on implants which are typically made of titanium or on remainders of original teeth these materials are often not suitable. Therefore, usually an intermediate structure is provided between the dental restoration and the implant or remainder. Widespread intermediate structures are bases or abutments which are cemented to the crowns or restorations. For example, for being connected to titanium implants often crowns are cemented and/or bonded to titanium bases which are then placed on and connected to the implant.

Typically, restorations are cemented on bases or abutments outside or inside the mouth by a dental technician or dentist. Thereby, specific adhesives are used as cements wherein many types of cement are mixed of plural components before being applied. The cemented bases and restorations are then connected to the implants or remainders in the mouth wherein the bases contact the implants or remainders. Often, the dental restoration together with the base is fixed to the implant by means of a screw axially projecting through the dental restoration and the base into the implant.

For accurately cementing a dental restoration on a base, often a model is used. For that purpose, at least a portion of the mouth in which an implant is set for mounting the dental restoration is modelled by a dental technician or a dentist using known modelling techniques. However, even though such model based cementing allows for precisely cementing the restoration to the base and for providing sophisticated cemented restoration-base-structures it is comparably cumbersome.

To make the cementing process faster and cheaper many dental technicians or dentists do manually cement the dental restoration to the base. Thereby, often a screw hole of the base which typically has a hollow interior is closed by a piece of wax or an elastic plug such that no cement can enter the interior of the base. The elastic plug typically is adapted to the geometry of the base in order to allow a safe closing. However, considering that dental restorations and particularly bases usually are comparably small such manual cementing often provides results of reduced quality.

For example, often the cement is not regularly or uniformly distributed between the dental restoration and the base such that the connection is not consistently strong. Also, often the dental restoration can manually not be precisely positioned or oriented such that a reduced comfort and a reduced usability may result. Furthermore, overdosed cement may escape the restoration-base-structure which can lead to inflammation of the gum or the like.

For facing these drawbacks WO 2018/060194 A1, suggests a conveniently applicable cement free system to connect dental restorations to implants. In particular, an abutment arrangement with a post body, e.g. a base, and a screw element is described. The post body has an axial passage equipped with a head slot, a press section limiting the head slot and an expansion part. The screw element has a head section, a thread section axially distant from the head section and a spreading section. An outer diameter of the expansion part of the post body is elastically increasable by applying a lateral force. The screw element is arrangeable in the passage of the post body such that the head section is positioned in the head slot abutting the press section and such that the screw element extends out of the post body.

In use of the abutment arrangement described in WO 2018/060194 A1, the screw element has multiple effects when being screwed into the implant. On one hand, by abutting the press section of the passage of the post body, it presses the post body onto the dental implant such that a firm connection to the implant is established. On the other hand, by the spreading section of the screw element being arranged at the pressure receiving section of the passage of the post body, a lateral force is applied to the expansion part of the post body such that the screw element expands the post body at its expansion part. In particular, the expansion part is expanded into a corresponding recess or cavity provided in the dental restoration such that the dental restoration is firmly connected to the post body. Thereby, no cementing is necessary which allows for making the restoration process essentially faster, more efficient and safer.

However, even though the system described in WO 2018/060194 A1 can be beneficial compared to known other systems, it involves high demands as to its production tolerances. In particular, the distance between the press section and the expansion part of the post body as well as the dimensions of the expansion part of the post body and the spreading section of the screw element have to precisely match such that an accurate connection of the dental restoration to the post body and fixation of the post body to the implant can be established by the screw element. More specifically, precisely dimensioning the shape (length and width) of the spreading section of the screw element and of the expansion part of the post body such that they accurately mate and interact in use can be highly challenging.

Therefore, there is a need for an efficiently manufacturable system allowing for a precise and safe connection of a dental restoration to a dental implant.

### Disclosure of the Invention

According to the invention this need is settled by an abutment arrangement as it is defined by the features of independent claim 1, and by a dental restoration kit as it is defined by the features of independent claim 11. Preferred embodiments are subject of the dependent claims.

In one aspect, the invention is an abutment arrangement for connecting a dental restoration to a dental implant. The term "dental restoration" as used herein can relate to a dental prosthesis typically being the outermost structure of one artificial tooth or plural artificial teeth. It can particularly be a crown or a bridge or the like. The dental restoration can cap or encircle the dental implant and form the visible portion of the artificial tooth or teeth and its chewing face(s). Advantageously, it has the shape of the tooth or teeth to be replaced by the restoration. Typically restorations such as crowns are made of a metal, a metal ceramic, a ceramic, zirconium, zirconium dioxide, polymethylmethacrylate (PMMA), a composite, a fiber-reinforced composite or another material having color and properties similar to natural teeth.

The term "dental implant" as used herein can relate to a surgical component that interfaces with the bone of the jaw or skull to support the dental restoration. It can act as an orthodontic anchor or being an artificial tooth root. Dental implants are also known as an endosseous implants or fixtures in the art. Typically dental implants are placed in a hole in a bone structure where they are fixed or grown in by a biologic process called osseointegration. Thereby, the dental implants or more particularly their materials, such as titanium, form an intimate bond to the bone. For osseointegration a variable amount of healing time is required before either the dental restoration is attached directly or via an abutment.

The term "abutment" or "base" as used herein can relate to a substructure or intermediate structure to be integrated in the dental restoration for being mounted to the dental implant. The abutment or base can be adapted to align and hold the restoration. It can particularly be quasi cup shaped having a cylindrical or conical section and an implant face section.

The abutment arrangement according to the invention comprises a post body and a screw element. The post body has an axial passage extending between an apical aperture and an occlusal aperture. The terms "occlusal" and "apical" as used herein relate to directions in an intended use or application of the abutment arrangement. This is, the abutment arrangement directly or indirectly connects the dental restoration to the dental implant set in a j awbone of a patient. Thereby, apical is the direction towards the implant and occlusal is the opposite direction usually towards the mouth cavity. Even though these two terms literally relate to directions, they are also used for describing locations of portions of the abutment arrangement or the dental restoration such as a section near or at an occlusal or apical end, or relations between portions of the abutment arrangement or the dental restoration such as portions being closer to the occlusal or apical end relative to other portions.

The term "axial" as used herein can relate to an axis of the abutment arrangement or of parts thereof. Thereby, the axis of the screw element can be identical to the axis of the post body when the screw element is arranged in the post body as intended. This axis can particularly essentially correspond to an axis of the tooth to be replaced or fixed. When being applied in the mouth, the axial passage, thus, can extend from an occlusal surface of the restoration to the dental implant.

The passage of the post body has a head socket and a press section at an apical end side of the head socket. Advantageously, the passage is straight or has a straight axis extending from the apical aperture to the occlusal aperture.

The screw element has a head section and a fastening thread section axially distant from the head section. The term "axially distant" in this connection can relate to the two sections being offset from each other along a longitudinal extension of the screw element. In particular, the screw element advantageously is longitudinal and has an axis along which the two sections are offset from each other. The axis typically is straight. Typically, the head section is near an occlusal end of the screw element and the fastening thread section is near an apical end of the screw element.

The screw element is designed to be arranged in the passage of the post body so that the head section is positioned in the head socket abutting the press section, and so that the screw element extends through the apical aperture whereby the fastening thread section of the screw element at least partially is positioned out of the post body. Thereby, the screw element can be designed to be appropriately arranged inside the passage by being dimensioned, shaped and configured to allow correct and mated positioning inside the passage. For example, the head section can be dimensioned to have a larger diameter than the fastening thread section. Thereby, an apical end of the head section can form a conical or step-like stop. Advantageously, the head section of the screw element and the head slot of the post body are matingly shaped such that the head section fits into the head slot.

The post body further has a mounting portion which is flexible between an expanded position and a constricted position. The mounting portion has an inner face radially limiting the passage. In the expanded position the mounting portion has a larger outer circumference than in the constricted position. The term "outer circumference" as used in this connection can relate to a radial extension of the outer surface of the mounting portion. Thereby, the outer circumference can be defined by a closed or continuous outer surface or outer boundary of the mounting portion or by an intermitted surface or a plurality of surface pieces. Also, the outer circumference can define an outer diameter, which can be the largest diameter of a cross section of the mounting portion and, more particularly, of all cross sections perpendicular to the axis of the post body. The outer circumference can be defined by the mounting portion having a closed outer surface or outer boundary, or by a projection tightly surrounding the intermitted outer surface of the mounting portion. The outer diameter of the outer circumference in the expanded position exceeds the outer diameter in the constricted position. In the expanded position, the mounting portion can be connected to the dental restoration when the post body is positioned in an appropriate cavity of the dental restoration. Thereby, the expanded position can be a position in which the mounting portion is maximally expanded or a position in which further expansion of the mounting portion is still possible. In any case, in the expanded position the mounting portion is more expanded than in the constricted position. In the constricted position, the dental restoration can be moved off the post body. Thus, the constricted position can also be referred to as loose position or the like. The expanded position can be achieved by actively moving the mounting portion. For example such active moving can be achieved by applying a force to the mounting portion. Alternatively or additionally, the mounting portion can be embodied to automatically move into the expanded position when no force is applied. For example, such automatic movement can be achieved by providing the mounting portion with appropriate elasticity.

Besides flexible sections, the mounting portion can also have sections where it is not flexible, i.e. its outer diameter cannot be changed. In particular, such non-flexible sections can be axially offset from the flexible sections. For being flexible in the sense of the invention, it is sufficient if the outer circumference of the mounting portion can be increased at one single axial location. However, the flexibility of the mounting portion has to be appropriate to establish a connection between the post body and the dental restoration. A minor flexibility which, e.g., may be intrinsically given within any material if a sufficient force is applied does not qualify as flexible in the sense of the invention as long as it is not appropriate to securely connect the dental restoration to the post body.

The screw element further has a first locking section and the inner face of the mounting portion has a second locking section. Thereby, when the screw element is arranged in the passage of the post body, the first locking section of the screw element is positioned adjacent to the second locking section of the mounting portion of the post body. The first locking section of the screw element and the second locking section of the inner face of the mounting portion are configured to either plastically deform the screw element, plastically deform the post body, or plastically deform the screw element and the post body, such that the mounting portion of the post body is locked in the expanded position.

The term "plastically deform" as used in connection with the first and second locking sections relates to a reshaping of the material the first locking section and/or the second locking section are made of. Such reshaping is not achieved by purely bending or dislocating of the mounting portion relative to any other portion but requires that the mounting portion of the post body or the screw element is quasi irreversibly or non- elastically reshaped. In particular, the materials may undergo irreversible changes of shape in response to the first and second locking section applying a force toward each other. For example, such reshaping can involve cutting, penetrating, piercing and/or squeezing. Thus, in correct use of the abutment arrangement, the first and/or second locking sections not simply elastically relocated or bent but any of the materials involved is permanently reshaped.

The first and second locking sections allow for securely blocking the mounting portion of the post body such that, in use of the abutment arrangement, the dental restoration can safely be fixed on the post body without requiring any additional components such as cement or the like. More specifically, the locking of the mounting portion of the post body typically is established by a tight fit. Also, the achieved fix connection between the post body and the dental restoration can be tight or sealed.

By means of the plastic deformation of the screw element and/or the post body, dimensional inaccuracies of the post body and/or the screw element and/or the dental restoration particularly a cavity thereof can be compensated. Also, as mentioned, it can be assured that the mounting portion of the post body is securely connected to the dental restoration. For example, the outer circumference of the mounting portion can be pressed into a corresponding cavity of the dental restoration wherein the mounting portion contacts the walls of the cavity. Due to the mentioned deformation, the connection does not fully depend on the accuracy of the dimensions of the screw element and the post body. Rather, the mounting portion can be designed to securely contact or interact with the dental restoration in its expanded position and the screw element locks the mounting portion in its expanded position.

Like this, the abutment arrangement according to the invention allows for a precise and safe connection of the dental restoration to the dental implant via its post body and its screw element. Also, such abutment arrangement can be efficiently manufactured since production tolerances are of comparable little importance.

Preferably, the first locking section of the screw element is embodied as a displacing section, wherein the displacing section of the screw element is configured to deform the material of the mounting portion of the post body such that a shape of the inner face of the mounting portion of the post body is changed.

Preferably, the inner face of the mounting portion of the post body has a projection configured to be reshaped when being pressed by the displacing section of the screw element. The projection can be a rib, a bulge or the like, or it can be formed by grooves. Such projection allows the inner face to be structured or contoured for being efficiently deformed. In particular, when the displacing structure of the screw element is advanced or forced into the mounting portion, the projections can be squeezed or otherwise deformed such that the inner face is reshaped. When the post body is embodied like this, the displacing section of the screw element can be designed in a particularly simple fashion. For example, it can have a radial outer face which is straight.

Preferably, the first locking section of the screw element is an invading section. Invading the material of the mounting portion of the post body by the invading section of the screw element can be established in various manners. For example, the material can be displaced by, e.g. piercing, penetrating or cutting it. The aim of invading is that the screw element and the post body are tight fitted by inter-engaging each other at the mounting portion and the invading section. Thereby, the mounting portion can be fixedly locked in the expanded position and a movement of the mounting portion into its constricted position can be prevented as long as the screw element invades the mounting portion. In other word, the screw element eliminates the flexibility of the mounting portion when the invading section invades the material of the mounting portion.

The flexibility of the mounting portion of the post body can be provided in any suitable manner. In advantageous embodiments the mounting portion can be elastically deformable for being flexible. Like this, it can be achieved that the mounting portion can be relocated or bent by a force or resistance and that it automatically returns to an initial position after release of the force or resistance. For example, the mounting portion can be formed of an elastic material which allows to be relocated or bent for providing the required flexibility. Or, the material of the mounting portion can be a material which is activatable, e.g. by an electric field, ultrasonic or the like for changing its shape to be flexible. In addition to that, the material is deformable by the displacing section of the screw element.

Preferably, the mounting portion of the post body comprises flexible lamellas. Such lamellas allow for adjusting on the one hand the strength of flexibility which can define or affect the retention or connection force between the post body and the dental restoration. On the other hand, the flexible lamellas allow for adjusting the force or torque required for deforming or invading the material of the mounting portion. Advantageously, the deforming or invading force or torque is lower than a force or torque required to press the screw element to the dental implant for safely connecting the dental restoration to the dental implant. For example, the screw element's torque required to fix the post body to the dental implant may be set to about 35 Newton metres (Nm). By appropriately designing the lamellas the torque required for invading the material of the mounting portion of the post body can be designed to be lower than 35 Nm such as, e.g., about 16 Nm.

When being equipped with lamellas, the mounting potion of the post body can comprise blind sections arranged between the flexible lamellas. Such blind sections in between the lamellas the mounting portion can extend about its complete circumference. The blind sections allow for covering the complete circumference in any status of the lamellas, for example also when the lamellas are outwardly displaced or bent. This makes it possible to prevent that the interior of the post body, in use particularly the screw element, shines through or is otherwise visible.

For cutting the mounting portion, the invading section of the screw element preferably comprises an invading rib such as a cutting thread. Such rib allows to efficiently invading the material of the mounting portion. In particular, when being embodied as a cutting thread, by the same movement which is required to fasten the screw element to the dental implant, the material of the mounting portion can be cut and, thus, be invaded.

Thereby, the cutting thread of the invading section of the screw element can have an essentially identical pitch as a fastening thread of the fastening thread section of the screw element. The term "pitch" in connection with the threads relates to a distance between axially neighboring ridges of the respective thread. The cutting and fastening threads advantageously have an essentially identical lead relating to an axial distance that is covered by one complete rotation of the screw element (360°).

The cutting thread of the invading section of the screw element can have an identical number of starts as a fastening thread of the fastening thread section of the screw element. The term "start" in connection with the threads relates to a beginning of a ridge of the respective thread. Thus, the number of starts typically is the same as the number of ridges of the thread.

The cutting thread of the invading section of the screw element can have an essentially identical angle as a fastening thread of the fastening thread section of the screw element.

By the mounting and cutting threads having identical pitches and/or starts and/or angles the same movement for fastening the screw element to the dental implant can efficiently also cause the invasion of the material of the mounting portion of the post body. In particular, such embodiments allow for providing a proper and well defined cutting of the mounting portion such that a safe form fit between the screw element and the post body can be provided.

As an alternative to provision of the invading section or cutting thread on the first locking section of the screw element, the invading section, cutting thread, or other cutting structure can also be embodied at the second locking section of the post body. In that way, deformation can be achieved in the opposite way, i.e. at the screw element. Also, combinations of invading sections at first and second locking sections are possible.

Preferably, the first locking section of the screw element has a projection configured to be reshaped when being pressed by the second locking section of the inner face of the mounting portion of the post body. Such projection can be embodied by a bar like-structure extending at the outer circumference of the screw element. Thereby, the protrusion can be dimensioned such that a suitable plastic deformation can be achieved for blocking the mounting portion of the post body in the expanded position. Also, dimension of the protrusion can be adapted to achieve a convenient screwing of the screw element into an implant preventing the excessive torque for deformation. Advantageously, the protrusion spirally extends along the outer surface of the screw element, a head thereof or the like.

Preferably, the mounting portion of the post body is configured for a snap-fit connection with the dental restoration. The term "snap-fit" as used herein, which can also be denoted as snap-fastening, relates to an engagement between post body and the dental restoration by snapping or clipping the two pieces into each other. Like this, a push-button like connection can be achieved. In particular, the mounting portion can be configured to be in the expanded position or even further expanded when no force or resistance acts on the post body. While connecting to the dental restoration the mounting portion can be compressed by a force or resistance to the constricted position and then get back towards its original shape in the expanded position when being at the final connection location. In this position a positive locking or form locking can be established between post body and dental restoration. Like this, a conveniently applicable and safe snap-fit or clipping connection can be provided.

Thereby, the mounting portion of the post body preferably has a neck section and a bulge section radially protruding the neck section when the mounting portion is in the expanded position. The term "radial" or "lateral" as used herein can relate to a direction essentially perpendicular to an occlusal, apical or axial direction. By radially protruding, the bulge section sticks laterally out relative to the neck section. Thereby, the neck and bulge sections together can form a mushroom-like shape. The neck section of the mounting portion of the post body preferably is located apically of the bulge section of the mounting portion of the post body. The bulge section can be convexly shaped to be arranged in an associated concave portion of the cavity of the dental restoration such that moving the dental restoration in relation to the post body is prevented when the mounting portion is in the expanded position and locked. The bulge section can embody an increase of the axial cross section of the outer circumference of the mounting portion. It can extend around the complete circumference of the post body or at sections of the circumference only where expandable sections such as the lamellas are located. The neck section can be essentially cylindrical or the like. Such shape of the mounting portion allows for a particularly efficient connection of the post body to a dental restoration having a corresponding cavity.

In one preferred embodiment, the post body is a single piece device which can be made of one single material or one single composition of materials. Such single piece or monolithic post body can be made of titanium or the like in order to suit to the material of the implant. Particularly, when the mounting portion is provided with lamellas such monolithic post body can be appropriate.

In another preferred embodiment, the post body has an occlusal part having the occlusal aperture of the passage, and an apical part having the apical aperture of the passage, the apical part of the post body is made of a first material having a rigidity essentially the same as a rigidity of the dental implant, and the occlusal part of the post body is made of a second material providing flexibility to change between the expanded position and the constricted position and to connect to the dental restoration. The first material and the second material particularly are different materials. By providing different materials in the occlusal and apical parts of the post body, it can be achieved that both parts have appropriate specific properties. For example, in the occlusal part it is essential that the material allows for being appropriately flexible, e.g. to be efficiently bent or displaced in a lateral direction, and deformable, e.g. to allow the first locking section of the screw element to deform the second locking section of the mounting portion. Such flexibility may be disadvantageous in the apical part. However, by providing the apical part in another material, it can be provided with suitable properties such as, e.g., rigidity or similar characteristics as the material of the dental implant. Specifically, the apical part can be made of the same material as the dental implant. Thus, the two material composition of the post body allows it to efficiently and specifically perform its various functions, which can, e.g., be a safe securing on the dental implant and a flexible change between the non-fastening and the expanded position of the mounting portion.

Thereby, the first material of the apical part of the post body preferably is titanium and/or the second material of the occlusal part of the post body is PEEK, PMMA, Polycarbonate, Nylon, Silicone or a combination thereof. The acronym PEEK relates to polyether ether ketone being an organic thermoplastic polymer of the polyaryletherketone (PAEK) family which is frequently used in engineering applications. Beyond others, PEEK has a comparable good biocompatibility, can have a white color similar to teeth, is comparably rigid and still has a comparably high flexibility allowing for a good elastic deformation. The acronym PMMA relates to Poly(methyl methacrylate) which is also known as acrylic or acrylic glass. Titanium is widespread used in dental implants for various reasons such as good biocompatibility, efficient osseointegration and others. Therefore, by providing the apical part in titanium, it can firmly and matingly be secured on the implant. For esthetic reasons, the apical part can be colored, e.g. in white or white-like, in order to make it less perceivable.

In an advantageous embodiment, the apical part has a first connection structure and the occlusal part has a second connection structure, wherein the post body is assembled by the first connection structure of the apical part engaging the second connection structure of the occlusal part. Such first and second connection structures allow for efficiently providing the post body in two materials. Thereby, the first connection structure of the apical part can be a first snap-in formation and the second connection structure of the occlusal part can be a second snap-in formation corresponding to the first snap-in formation of the apical part. Such first and second snap-in formations allow for snapping the apical part and the occlusal part together. Like this, an efficient assembly of the post body made of two different materials can be achieved.

The post body can further comprise a protrusion element dimensioned to releasably hold the dental restoration when being arranged onto the post body. With such a protrusion element the dental restoration can intermediately be held on the post body. Like this, a convenient and efficient handling can be achieved. In particular, when mounting the dental restoration such as a crown to the dental implant it can hold the post body via its protruding element by friction before fixing it to the implant such that the post body can be conveniently positioned at a correct location and properly aligned before screwing the screw element to the dental implant.

Thereby, the protrusion element can be formed at the occlusal part of the post body. Such a protrusion element can be embodied in the same material as the occlusal part or the lamellas. Thus, it can have an elasticity which allows for slightly clamping the dental restoration from the inside, i.e. in its cavity, such that it is held by friction onto the post body.

For achieving a stable and upright intermediate connection between the post body and the dental restoration, the post body can be equipped with plural respective protrusions which, advantageously, are regularly positioned on the post body.

The post body can also be equipped with a flange portion. Particularly, such flange portion may be located apically offset the mounting portion of the post body. Like this, an increased surface can be provided to contact a respective occlusal surface of the dental implant. This allows for distributing the forces such as biting or chewing forces over a larger area which can reduce the wear of the post body and the implant where they are connected and to increase stability of the system.

For a beneficial functional separation of the abutment arrangement (i) firmly securing the post body to the dental implant and (ii) firmly connecting the post body to the dental restoration, the mounting portion of the post body advantageously is separate and axially distant from the press section of the passage of the post body. In particular, the mounting portion can be distant from the press section in an occlusal direction. Thus, the press section can be arranged closer to or even at an apical end of the post body and the mounting portion closer to or even at an occlusal end of the post body.

In correspondence with such an arrangement of the post body, the head section of the screw element can have a push portion abutting the press section of the passage of the post body when the screw element is arranged in the passage of the post body. The push portion of the head section of the screw element advantageously is separate and axially distant from the first locking section of the screw element.

Thereby, the push portion of the head section of the screw element can be conically tapering towards the fastening thread section of the screw element. Such a conical push portion allows the head section to efficiently apply a pressure force towards the dental implant when the screw element is screwed to the dental implant as intended. Thereby, the press section of the passage of the post body advantageously also is conical corresponding to the push portion of the head section of the of the screw element. The press section allows for efficiently receiving the pressure force from the push portion such that the post body is increasingly fixed to the dental implant when the screw element extends through the passage and is screwed into the implant. In particular, mainly an axial portion of a pressure force acting from the push portion to the press section presses the post body on the implant such that the post body is firmly fixed to the dental implant.

In another aspect, the invention is a dental restoration kit comprising an abutment arrangement as described above and a dental restoration. The dental restoration has a cavity configured to receive the mounting portion of the post body of the abutment arrangement to connect to the abutment arrangement.

With such a dental restoration kit the effects and advantages described above in connection with the abutment arrangement according to the invention and its preferred embodiments can efficiently be achieved.

The cavity of the dental restoration can particularly be a through bore allowing the screw element to be provided into or through the post body while the dental restoration is arranged on the post body. In particular, the through bore can have an axis which is identical to the axis of the abutment arrangement when the dental restoration is arranged on the post body as intended. In a sophisticated manner the dental restoration can be manufactured in a CAD/CAM process. Alternatively, it can be manufactured in a pressing process or a molding process or a combination thereof.

The through bore or cavity can be formed or shaped to specifically suit or correspond to the mounting portion of the post body. Preferably, the cavity of the dental restoration comprises a stem section and a cave section radially protruding the stem section. Such a shape of the cavity can be particularly suitable for a snap-fit connection with the post body.

The cave section can be shaped as a concave impression into which the bulge section of the mounting portion of the post body can be expanded such that moving the dental restoration in relation to the post body is prevented when the mounting portion is in the expanded position. The impression can be embodied as an increase of the axial cross section of the cavity. It can extend around the complete circumference of the post body or at sections of the circumference only where expandable sections of the mounting portions such as the lamellas are located. Such a concave impression allows for providing a safe connection between the post body and the dental restoration. The stem section can be essentially cylindrical or the like.

Thereby, for establishing a secure snap-fit or push-button connection, the cavity of the dental restoration and the mounting portion of the post body preferably are arranged such that: (i) the bulge section of the mounting portion of the post body can pass through the stem section of the cavity of the dental restoration when the mounting portion of the post body is in the constricted position, (ii) the neck section of the mounting portion of the post body is located in the stem section of the cavity of the dental restoration when the bulge section of the mounting portion of the post body is received in the cave section of the cavity of the dental restoration, and (iii) the bulge section of the mounting portion of the post body cannot pass through the stem section of the cavity of the dental restoration when the mounting portion of the post body is in the expanded position.

Preferably, at least a portion of the cave section of the cavity of the dental restoration has an inner shape corresponding to an outer shape of the bulge section of the mounting portion of the post body, and the inner shape of the cave section of the cavity of the dental restoration is smaller than the outer shape of the bulge section of the mounting portion of the post body. The term "inner shape" and "outer shape" in this connection can relate to an inner or outer periphery. The dimensions of the inner and outer shapes can particularly be defined by the inner and outer radial diameters of the cavity and the mounting portion, respectively. Thus, the inner shape of the cave section of the cavity of the dental restoration can be smaller than the outer shape of the bulge section of the mounting portion of the post body by the cave section having smaller inner radial diameters than the outer diameters of the bulge section. Such dimensions of the cave section of the cavity and the bulge section of the mounting portion allows ensuring that the bulge section abuts the cave section when the mounting portion of the post body is arranged in the cavity of the dental restoration. A gap between the cave section and the bulge section can be prevented such that clearance between the post body and the dental restoration is also prevented. Like this, a safe and firm connection between post body and dental restoration can be achieved.

The term "smaller" as used in this connection can relate to a comparably slight difference. However, the difference should still be bigger than the production tolerances of the dental restoration and the post body. Like this, the effect of the production tolerances can be eliminated and a secure contact between the cave section and the bulge section can be achieved.

Preferably, the dental restoration kit comprises a dental implant with a socket configured to receive the fastening thread section of the screw element of the abutment arrangement to connect to the abutment arrangement. Like this, the dental implant can be adapted to particularly suit to the abutment arrangement and the dental restoration. This allows for providing an exactly adjusted system.

There is a method of connecting a dental restoration to a dental implant. The method comprises the steps of: (i) obtaining an abutment arrangement as describes above, (ii) providing the dental restoration with a cavity having an apical opening and an occlusal opening, wherein the cavity is formed to receive the mounting portion of the post body of the abutment arrangement, (iii) setting a dental implant into a jaw bone, (iv) positioning the post body on the set dental implant, (v) clipping or snap-fitting the dental restoration through the apical opening of the cavity on the post body of the abutment arrangement such that the mounting portion of the post body of the abutment arrangement is received in the cavity of the dental restoration, wherein, while clipping or snap-fitting the dental restoration on the post body of the abutment arrangement, the mounting portion of the post body of the abutment arrangement changes from the constricted position to the expanded position, (vi) providing the screw element of the abutment arrangement through the occlusal opening of the cavity of the dental restoration and the passage of the post body of the abutment arrangement, (vii) securing the screw element to the dental implant, whereby (vii-1 ) the head section of the screw element of the abutment arrangement abuts the press section of the passage of the post body of the abutment arrangement such that the post body of the abutment arrangement is pressed to the dental implant, and (vii-2) the first locking section of the screw element and/or the second locking section of the mounting portion of the post body are plastically deformed such that a tight fit is generated which locks the mounting portion of the post body of the abutment arrangement in the expanded position, and (viii) closing the occlusal opening of the cavity of the dental restoration.

Thereby, the passage can be closed by specific means in order to provide the dental restoration with a proper surface when being mounted to the implant. For example, a suitable plug can be pressed into the occlusal opening after the dental restoration is mounted to the dental implant.

Such a method allows for efficiently connecting a dental restoration to a dental implant without requiring using any cement. In particular, the method allows for efficiently achieving the effects and advantages described above in connection with the abutment arrangement and its preferred embodiments.

### Brief Description of the Drawings

The abutment arrangement according to the invention, and the dental restoration kit according to the invention are described in more detail herein below by way of exemplary embodiments and with reference to the attached drawings, in which:
Fig. 1 shows a perspective view of a post body of a first embodiment of an abutment arrangement according to the invention;
Fig. 2 shows a cross sectional view of the abutment arrangement of Fig. 1 with the post body and a screw element;
Fig. 3 shows a cross sectional view of a first embodiment of a dental restoration kit according to the invention having the abutment arrangement of Fig. 1, a crown and a dental implant, wherein the post body is positioned on the implant and the crown is distant from the post body;
Fig. 4 shows a cross sectional view of the dental restoration kit of Fig. 3, while the crown being positioned on the post body, wherein a mounting portion of the post body is in a constricted position;
Fig. 5 shows a cross sectional view of the dental restoration kit of Fig. 3, wherein the crown is positioned on the post body and the mounting portion of the post body is in an expanded position;
Fig. 6 shows a cross sectional view of the dental restoration kit of Fig. 3, while the screw element being placed into the post body, wherein the mounting portion of the post body is in the expanded position; Fig. 7 shows a cross sectional view of the dental restoration kit of Fig. 3, wherein the screw element is positioned in the post body and fixed to the dental implant, and the mounting portion of the post body is in the expanded position secured by the screw element;
Fig. 8 shows a cross sectional view of a second embodiment of a dental restoration kit according to the invention comprising a second embodiment of an abutment arrangement according to the invention, a crown and a dental implant, wherein a post body of the abutment arrangement is positioned on the implant and the crown is distant from the post body;
Fig. 9 shows a cross sectional view of the dental restoration kit of Fig. 8 with the crown being positioned on the post body;
Fig. 10 shows a cross sectional view of the dental restoration kit of Fig. 8 with the crown being positioned on the post body and a screw element of the abutment arrangement being loosely set into the post body and the implant;
Fig. 11 shows a detail of Fig. 10;
Fig. 12 shows a cross sectional view of the dental restoration kit of Fig. 8 with the crown being positioned on the post body and the screw element of the abutment arrangement being fixedly screwed into the implant;
Fig. 13 shows a detail of Fig. 12.

### Description of Embodiments

In the following description certain terms are used for reasons of convenience and are not intended to limit the invention. The terms "right", "left", "up", "down", "under" and "above" refer to directions in the figures. The terminology comprises the explicitly mentioned terms as well as their derivations and terms with a similar meaning. Also, spatially relative terms, such as "beneath", "below", "lower", "above", "upper", "proximal", "distal", and the like, may be used to describe one element's or feature's relationship to another element or feature as illustrated in the figures. These spatially relative terms are intended to encompass different positions and orientations of the devices in use or operation in addition to the position and orientation shown in the figures. For example, if a device in the figures is turned over, elements described as "below" or "beneath" other elements or features would then be "above" or "over" the other elements or features. Thus, the exemplary term "below" can encompass both positions and orientations of above and below. The devices may be otherwise oriented (rotated 90 degrees or at other orientations), and the spatially relative descriptors used herein interpreted accordingly. Likewise, descriptions of movement along and around various axes include various special device positions and orientations.

To avoid repetition in the figures and the descriptions of the various aspects and illustrative embodiments, it should be understood that many features are common to many aspects and embodiments. Omission of an aspect from a description or figure does not imply that the aspect is missing from embodiments that incorporate that aspect. Instead, the aspect may have been omitted for clarity and to avoid prolix description. In this context, the following applies to the rest of this description: If, in order to clarify the drawings, a figure contains reference signs which are not explained in the directly associated part of the description, then it is referred to previous or following description sections. Further, for reason of lucidity, if in a drawing not all features of a part are provided with reference signs it is referred to other drawings showing the same part. Like numbers in two or more figures represent the same or similar elements.

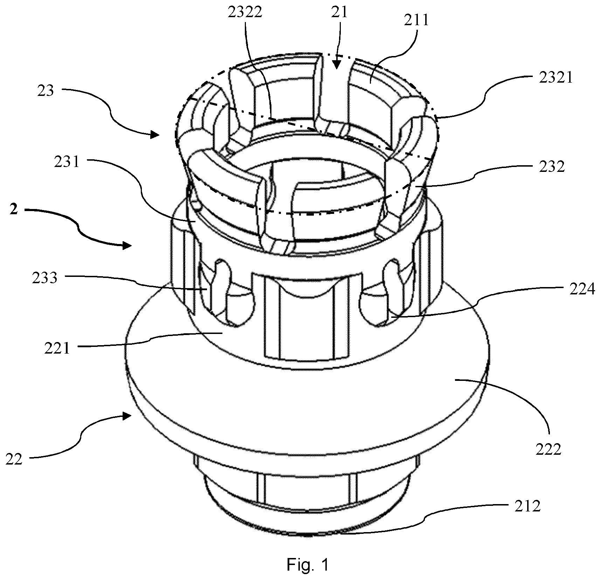

Fig. 1 shows a post body 2 of a first embodiment of an abutment arrangement 1 according to the invention. The post body 2 consists of two pieces, i.e. an upper occlusal part 23 forming a mounting portion of the post body 2 and a lower apical part 22. It further has a central passage 21 with an occlusal aperture 211 and an apical aperture 212. The passage 21 axially extends through the occlusal part 23 and the apical part 22. The occlusal part 23 comprises a ring portion 231 from which six lamellas 232 axially extend in an upward or occlusal direction. The lamellas 232 are regularly distributed around the ring portion 231 and establish a bulge section of the mounting portion or occlusal part 23. Further, the lamellas 232 define an inner face radially limiting the passage 21, as second locking section. In the situation shown in Fig. 1 where no forces act on the post body 2 the mounting portion or occlusal part 23 is in the expanded position. There, the outer surface of the lamellas 232 widens from the ring portion 231 towards the occlusal aperture 211. In other words, along an occlusal direction the outer surfaces of the lamellas 232 are slightly radially or laterally inclined. Thereby, the lamellas 232 define an outer circumference 2321 which increases in diameter 2322 from the ring portion 231 towards the occlusal aperture 211. The outer circumference 2321 is ring-shaped. The ring portion 231 establishes a neck section of the mounting portion or occlusal part 23.

Below the lamellas 232 four snap-in tongues 233 as a snap-in formation axially extend from the ring portion 231 in a downward direction. Each snap-in tongue 233 has an axial slit dividing the snap-in tongue 233 in two parallel portions. From an outer surface of each snap-in tongue 233 a protrusion laterally extends.

The occlusal part 23 is made of PEEK. The apical part 22 is made of titanium and comprises a cylinder 221 and an intermediate flange portion 222 extending about the cylinder 221. At an occlusal end region, the cylinder 221 has four snap-in recesses 224 as snap-in formation located in correspondence with the snap-in tongues 233 of the occlusal part 23. Thereby, the snap-in recesses 224 are formed to receive the snap-in tongues 233 when the occlusal part 23 is pressed top down onto the apical part 22. In particular, the two parallel portions of each snap-in tongue 233 are elastically moved towards each other until they are arranged in the respective snap-in recess 224. There, they are moved back in the initial position such that the base part 22 and the expansion part 23 are firmly connected.

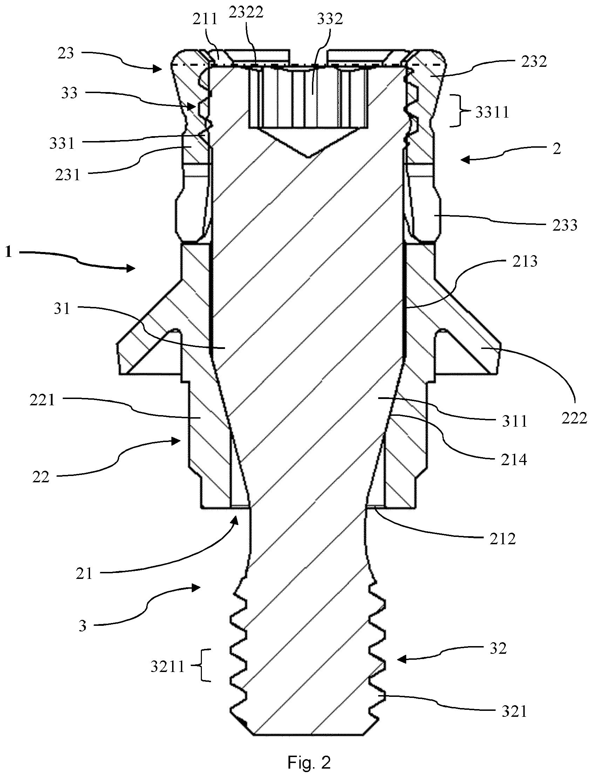

In Fig. 2 the abutment arrangement 1 is shown with its screw element 3 arranged inside the passage 21 of the post body 2. The screw element 3 comprises an upper invading section 33 as first locking section or displacing section near an occlusal end of the screw element 3 axially passing over in a head section 31 and in a lower fastening thread section 32 near an apical end of the screw element 3. The invading section 33 is equipped with a cutting thread 331 as invading rib about its outer surface. The fastening thread section 32 is equipped with a fastening thread 321 about its outer surface. The cutting thread 331 has a cutting thread pitch 331 1 and the fastening thread 321 has a fastening thread pitch 3211, wherein the cutting thread pitch 321 1 and the fastening thread pitch 321 1 are identical. Also the cutting thread 331 and the fastening thread 321 each have one single start and an identical thread angle.

At its top or occlusal end the screw element 3 comprises a driver recess 332 for accommodating a screwdriver. The head section 31 has a conical push portion 311 which axially tapers in a downward direction.

The screw element 3 is completely screwed into the passage 21 of the post body 2. Thereby, the head 31 of the screw element 3 is positioned in a head socket 213 of the passage 21 and the outer surface of the push portion 311 abuts a correspondingly conical press section 214 of the passage 21. The press section 214 is apically neighboring the head socket 213. When being screwed into the passage 21, the cutting thread 331 of the invading section 33 of the screw element cuts the material of the inner face of the lamellas 232. In particular, a spiral groove is cut into the inner face of the lamellas 232 in which the cutting thread 331 is arranged. Like this, the lamellas 232 are fixed and the expanded position is locked. In Fig. 2 the mounting portion or occlusal part 23 of the post body 2 is locked in an expanded position by the invading section 33 invading the material of the lamellas 232.

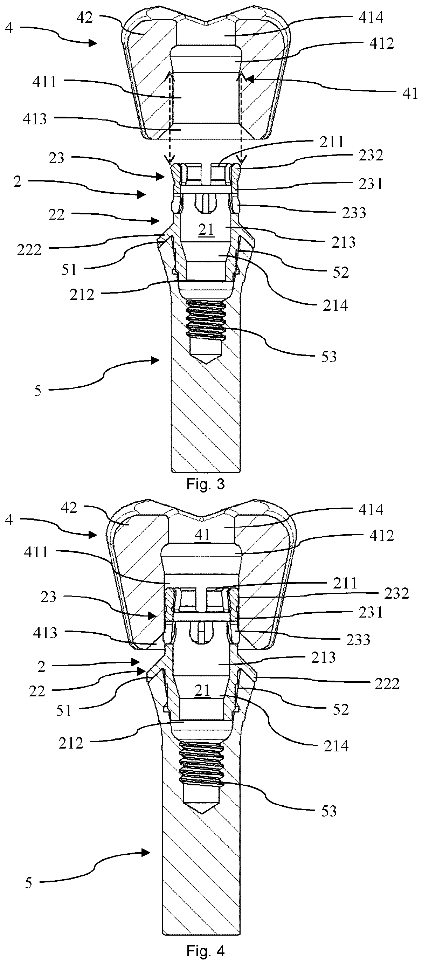

In Figs. 3 to 7 a first embodiment of a dental restoration kit having the abutment arrangement 1, a crown 4 as dental restoration and a dental implant 5 is shown in use.

The crown 4 has a ceramic crown body 42 with a bore 41 as cavity which is open in an upward and a downward direction. The bore 41 is shaped to form, from bottom to top, a conically narrowing apical end section 413, a cylindrical stem section 411, a concave cave section 412 and a cylindrical occlusal end section 414.

The implant 5 has a top end forming an occlusal end side 51. It further has an upper abutment recess 52 passing over into a lower screw recess 53. The post body 2 is positioned in the abutment recess 52 such that a portion of the cylinder 221 which is below the flange portion 222 lies inside the abutment recess 52. Thereby, the abutment recess 52 is shaped to fit the outer surface of the cylinder 221 such that the post body 2 cannot be rotated with respect to the implant 5. The flange portion 222 of the occlusal part 22 abuts the occlusal end side 51 of the implant 5.

As indicated by the dotted arrows in Fig. 3, an inner shape of the cave section 412 of the cavity 41 corresponds in form to an outer shape of the lamellas 232 of the post body 2. However, the inner shape of the cave section 412 is slightly smaller than the outer shape of the lamellas 232 when the lamellas 232 are in the expanded position. In particular, a diameter of the cave section 412 is slightly smaller than the diameter 2322 of the outer circumference 2321 of the lamellas 232.

In Fig. 4, the crown 4 is shown while being set on the post body 2. Introduction of the occlusal end of the post body 2 into the cavity 41 is facilitated by the conical apical end section of the cavity 41. For being located inside the stem section 411, the lamellas 232 are bent inwardly into the passage 21 of the post body 2. Thereby, the outer circumference 2321 defined by the lamellas 232 or its diameter 2322 is reduced. The lamellas 232 are now in a constricted position and can be shifted through the stem section 411.

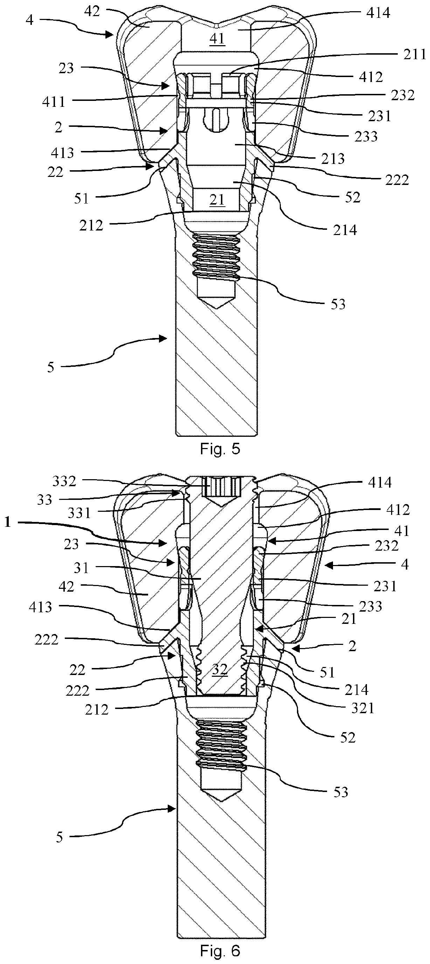

Fig. 5 shows the crown 4 being fully set on the post body 2 such that the apical end section 413 of the cavity 41 receives the flange portion 222 of the post body 2. In particular, a bottom surface of the apical end section 413 abuts a top surface of the flange portion 222. The lamellas 232 of the post body 2 are now positioned in the cave section 412 of the cavity 41 of the crown 4 and the crown 4 is snap-fitted on the post body 2. Like this, the crown 4 is connected to the post body 2.

In Fig. 6, the screw element 3 is introduced through the cavity 41 of the crown 4 and the passage 21 of the post body 2 towards the dental implant 5. Such introduction can be established by a straight top down movement of the screw element until the cutting thread 331 abuts the occlusal end of the lamellas 232 and/or the fastening thread abuts top end of the screw recess 53. Then, the screw element 3 is further advanced by a rotational movement about its axis.

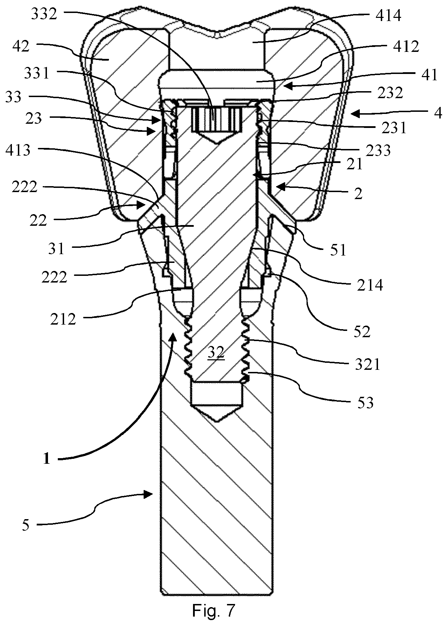

Fig. 7 shows the screw element 3 fully screwed into the implant 5. Thereby, it can be seen that the cutting thread invades, i.e. cuts, the material of the lamellas 232 and establishes a tight fit with the post body 2. Since the cutting thread 331 and the fastening thread 321 have the same geometric properties as described above, the same rotational movement of the screw element 3 establishes the fastening of the screw element 3 to the implant and the invasion of the material of the lamellas 232. The lamellas 232 are thereby safely locked in their expanded position. Like this, the crown 4 is firmly secured on the post body 2 and simultaneously the post body 2 is firmly mounted to the implant 5. The top end of the cavity 41 of the crown is then closed, e.g., by means of a plug. The crown 4 is now safely connected to the implant 5.

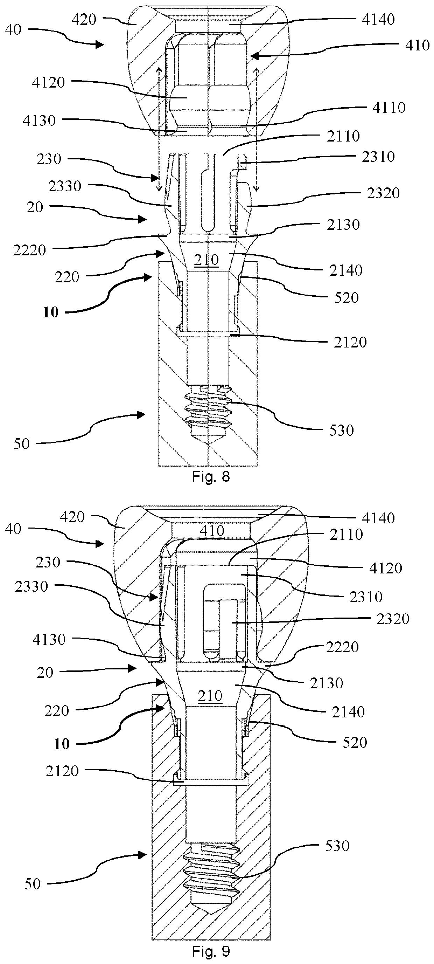

Fig. 8 shows a second embodiment of a dental restoration kit comprising a second embodiment of an abutment arrangement 10 according to the invention, a crown 40 as dental restoration and a dental implant 50. The abutment arrangement 10 has a one piece post body 20 with an upper occlusal portion 230 forming a mounting portion and a lower apical portion 220. It further has a central passage 210 with an occlusal aperture 2110 and an apical aperture 2120. The passage 210 axially extends through the occlusal portion 230 and the apical portion 220. The occlusal portion 230 comprises a frame 2310 with ring segment section and three axial stem sections connecting the ring segment section to the apical portion 220. The ring segment section extends about a little more than three quarters of the complete circumference of the ring. Limited by the ring segment sections two recesses are formed in each of which a lamella 2320 is arranged. The lamellas 2320 axially extend from the apical portion 220 towards the ring segment section of the frame 2310. Each of the lamellas 2320 has a free end and establishes a bulge section of the occlusal or mounting portion 230. In addition the two lamellas 2320 an indexing tongue 2330 axially extends from the apical portion 220 to the occlusal aperture 2110. The indexing tongue 2330 has a bulged outer surface and projects between two stem sections of the frame 2310 into an aperture defined by its ring segment section. The lamellas 2320 and the indexing tongue 2330 define an inner face as second locking section radially limiting the passage 210.

In the situation shown in Fig. 8, where no forces act on the post body 20, the mounting or occlusal portion 230 is in an expanded position. There, the outer surface of the lamellas 2320 and of the indexing tongue 2330 outwardly project. In other words, along an occlusal direction the outer surfaces of the lamellas 2320 and of the indexing tongue 2330 are slightly radially or laterally inclined. Thereby, the lamellas 232 and the indexing tongue 2330 define an outer circumference which increases in diameter from the apical portion 220 and slightly go back after having a maximum.

The body portion 20 is made of titanium and comprises a flange portion 2220 between the occlusal portion 230 and the apical portion 220.

The crown 40 has a ceramic crown body 420 formed in a shape corresponding to a tooth to be replaced. The crown body 420 is equipped with a bore 410 as cavity which is open in an upward and a downward direction. The bore 410 is shaped to form, from bottom to top, a conically narrowing apical end section 4130, a shortened cylindrical stem section 4110, a partially concave and partially cylindrical cave section 4120 and a cylindrical occlusal end section 4140.

The implant 50 has a top end forming an occlusal end side 510. It further has an upper abutment recess 520 passing over into a lower screw recess 530. The post body 20 is positioned in the abutment recess 520 such that a section of the portion of the body 20, which is below the flange portion 2220, lies inside the abutment recess 520. Thereby, the abutment recess 520 is shaped to fit the outer surface of the body 20 such that it cannot be rotated with respect to the implant 50. For achieving such non-rotatable mounting the outer circumference of the body 20 and the inner circumference of the recess 520 have an non-rotational-symmetric mating geometry. The flange portion 2220 of the body 20 abuts the occlusal end side 510 of the implant 50.

As indicated by the dotted arrows in Fig. 3, an inner shape of the cave section 4120 of the bore 410 corresponds in form to an outer shape of the lamellas 2320 and the indexing tongue 2330 of the post body 20. However, the inner shape of the cave section 4120 is slightly smaller than the outer shape of the lamellas 2320 and the indexing tongue 2330 when the lamellas 2320 and the indexing tongue 2330 are in the expanded position. In particular, an inner diameter of the cave section 4120 is slightly smaller than a diameter of the outer circumference of the lamellas 2320 and the indexing tongue 2330.

In Fig. 9, the crown 40 is snap-fitted onto the post body 20 by axially moving the occlusal portion 230 into the cave section 4120. Thereby, the lamellas 2320 and the indexing tongue 2330 are temporarily bent towards each other into a constricted position. In this position the lamellas 2320 and the indexing tongue 2330 can pass the cylindrical stem section 4110 of the bore 410 which has a narrowed diameter compared to the diameter of its cave section 4120. As soon as the lamellas 2320 and the indexing tongue 2330 have passed the stem section they are elastically moving back towards their expanded position. At the end of this snap-fit movement, the lamellas 2320 and indexing tongue 2330 are pressed against the surface of the cave section 4120. In order to ensure that the crown 40 is correctly aligned on the post body 20, the cave section 4120 has an indexing recess for receiving the indexing tongue 2330. Like this, rotation of the crown 40 relative to the post body 20 can be prevented.

In the snap-fitted position shown in Fig. 9, the post body 20 is not fixed to the implant such that it can be lifted off and separated from it. Also, even though the crown 40 is snap-fitted onto the post body 20 such that it is securely held on the post body 20, it still can be pulled-off from the post body 20 when applying a sufficient pulling force. In particular, for removing the crown 40, an axial pulling force would have to be applied which is sufficient for moving the lamellas 2320 and the indexing tongue 2330 into the constricted position.

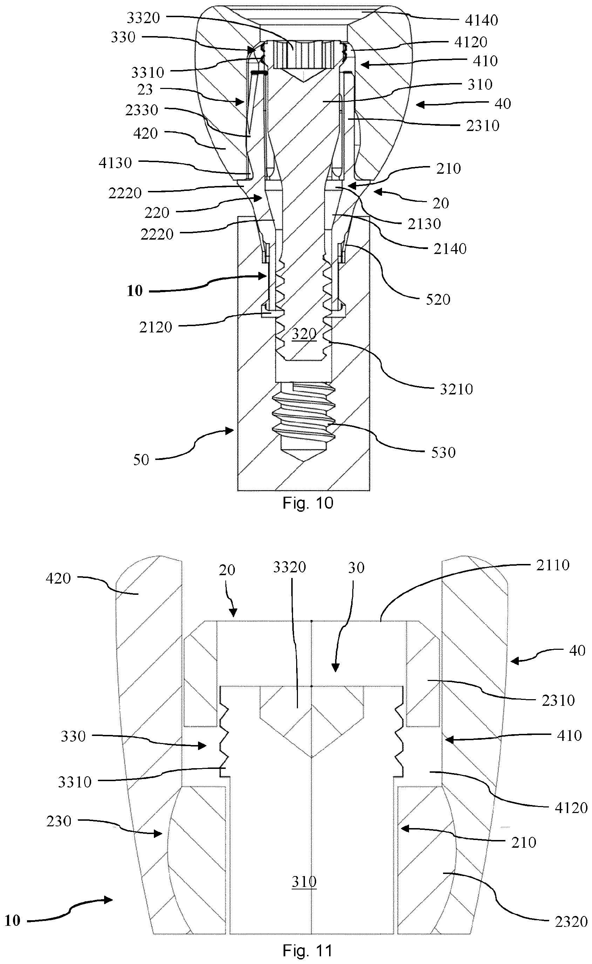

Figs. 10 to 13 show how the post body is fixed to the implant and, at the same time, the crown 40 is locked on the post body 20. The screw element 30 comprises an upper first locking section 330 near an occlusal end of the screw element 30 axially passing over in a head section 310 and in a lower fastening thread section 320 near an apical end of the screw element 30. The first locking section 330 is equipped with plural protrusions 3310 spirally extending along the outer surface of the first locking section 330.

The fastening thread section 320 is equipped with a fastening thread 3210 about its outer surface. At its top or occlusal end the screw element 30 comprises a driver recess 3320 for accommodating a screw driver. The head section 310 has a conical push portion 3110 which axially tapers in a downward direction.

As can be seen in Fig. 10, the screw element 30 is positioned top down into the passage 210 of the post body 20, whereas the fastening thread section 320 of the screw element 30 still is distant disengaged from the screw recess 530 of the implant 50. Whereas in Fig. 10 the first locking section 330 is above the post body 20,

Fig. 11 shows the screw element 30 further downwardly moved. Thereby, it can be seen that the ring segment section of the frame 2310 is dimensioned such that the first locking section 330 may pass in an unhindered manner. More specifically, an inner diameter of the ring segment section of the frame 2310 is larger than an outer diameter of the protrusions 3310 of the first locking section 330. In contrast, an inner diameter of the lamellas 2320 and of the indexing tongue 2330 is smaller than the outer diameter of the protrusions 3310 when being snapped-fitted into the cave section 4120. Like this, the first locking section 330 cannot freely pass the lamellas 2320 and the indexing tongue 2330.

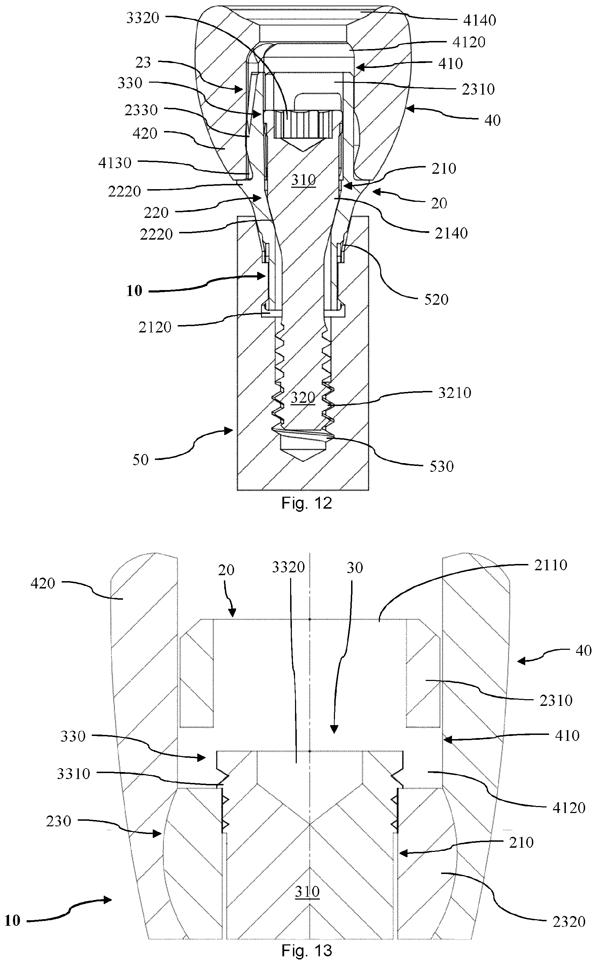

In Fig. 12 the screw element 30 is shown when being screwed into the screw recess 530 of the implant 50. Thereby, the fastening thread 3210 of the screw element 30 engages the screw recess 530 of the implant 50. As can be best seen in Fig. 13, when screwing the screw element 30 by means of the screw driver, the first locking section 330 of the screw element is forced into the inner face of the lamellas 2320 and the indexing tongue 2330 of the post body 20. Thereby, the protrusions 3310 are plastically deformed such that the first locking section 330 safely locks the lamellas 2320 and the indexing tongue 2330 in the expanded position. In other words, like this the lamellas 2320 and indexing tongue 2330 are fixed, and the expanded position of the post body 20 is locked.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative or exemplary and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figs individually although they may not have been described in the afore or following description. Also, single alternatives of the embodiments described in the figures and the description and single alternatives of features thereof can be disclaimed from the subject matter of the invention or from disclosed subject matter. The disclosure comprises subject matter consisting of the features defined in the claims or the exemplary embodiments as well as subject matter comprising said features.

Furthermore, in the claims the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. The term "about" in the context of a given numerate value or range refers to a value or range that is, e.g., within 20%, within 10%, within 5%, or within 2% of the given value or range. Components described as coupled or connected may be electrically or mechanically directly coupled, or they may be indirectly coupled via one or more intermediate components. Any reference signs in the claims should not be construed as limiting the scope.

## Claims

1. An abutment arrangement (1; 10) for connecting a dental restoration (4; 40) to a dental implant (5; 50), comprising a post body (2; 20) and a screw element (3; 30), wherein
the post body (2; 20) has an axial passage (21; 210) extending between an apical aperture (212; 2120) and an occlusal aperture (211; 2110);
the passage (21; 210) of the post body (2; 20) has a head socket (213; 2130) and a press section (214; 2140) at an apical end side of the head socket (213; 2130);
the screw element (3; 30) comprises a head section (31; 310) and a fastening thread section (32; 320) axially distant from the head section (31; 310); the screw element (3; 30) is designed to be arranged in the passage (21; 210) of the post body (2; 20) so that the head section (31; 310) is positioned in the head socket (213; 2130) abutting the press section (214; 2140), and so that the screw element (3; 30) extends through the apical aperture (212; 2120) whereby the fastening thread section (32; 320) of the screw element (3; 30) at least partially is positioned out of the post body (2; 20); and
the post body (2; 20) has a mounting portion (231, 232; 2320, 2330) which is flexible between an expanded position and a constricted position, and which has an inner face radially limiting the passage (21; 210),
**characterized in that**
the screw element (3; 30) has a first locking section (33; 330) and the inner face of the mounting portion (231; 232; 2320; 2330) has a second locking section (232), wherein,
when the screw element (3; 30) is arranged in the passage (21; 210) of the post body (2; 20), the first locking section (33; 330) of the screw element (3; 30) is positioned adjacent to the second locking section (232) of the mounting portion (231, 232; 2320, 2330) of the post body (2; 20), and
the first locking section (33; 330) of the screw element (3; 30) and the second locking section (232) of the inner face of the mounting portion (231, 232; 2320, 2330) are configured to plastically deform the screw element (3; 30), the post body (2; 20) or the screw element (3; 30) and the post body (2; 20) such that the mounting portion (231, 232; 2320, 2330) of the post body is locked in the expanded position.

2. The abutment arrangement (1; 10) of claim 1, wherein the first locking section (33; 330) of the screw element (3; 30) is embodied as a displacing section (33; 330), wherein the displacing section (33; 330) of the screw element (3; 30) is configured to deform the material of the mounting portion (231, 232; 2320, 2330) of the post body (2; 20) such that a shape of the inner face of the mounting portion (231, 232; 2320, 2330) of the post body (2; 20) is changed.

3. The abutment arrangement (1; 10) of claim 1 or 2, wherein the inner face of the mounting portion (231, 232; 2320, 2330) of the post body (2; 20) has a projection configured to be reshaped when being pressed by the first locking section (33; 330) of the screw element (3; 30).

4. The abutment arrangement (1; 10) of any one of the preceding claims, wherein the first locking section (33; 330) of the screw element (3; 30) is an invading section (33), and, preferably, the invading section (33) comprises an invading rib (331).

5. The abutment arrangement (1; 10) of any one of the preceding claims, wherein the first locking section (33; 330) of the screw element (3; 30) has a projection (3310) configured to be reshaped when being pressed by the second locking section (232) of the inner face of the mounting portion (231, 232; 2310, 2320, 2330) of the post body (2; 20), and, preferably, the projection spirally extends along an outer face of the screw element (3; 30).

6. The abutment arrangement (1; 10) of any one of the preceding claims, wherein the mounting portion (231, 232; 2310, 2320, 2330) of the post body (2; 20) comprises flexible lamellas (231, 232; 2310, 2320, 2330).

7. The abutment arrangement (1; 10) of any one of the preceding claims, wherein the mounting portion (231, 232; 2310, 2320, 2330) of the post body (2; 20) is configured for a snap-fit connection to the dental restoration (4; 40).

8. The abutment arrangement (1; 10) of claim 7, wherein the mounting portion (231, 232; 2310, 2320, 2330) of the post body (2; 20) has a neck section (231) and a bulge section (232; 2320, 2330) radially protruding the neck section (231) when the mounting portion (231, 232; 2310, 2320, 2330) is in the expanded position, and, preferably, the neck section (231) is located apically offset of the bulge section (232; 2320, 2330) of the mounting portion (231, 232; 2310, 2320, 2330) of the post body (2; 20).

9. The abutment arrangement (1; 10) of any one of the preceding claims, wherein the post body (2; 20) has an occlusal part (23) having the occlusal aperture (211; 2110) of the passage (21; 210) and an apical part (22) having the apical aperture (212; 2120) of the passage (21; 210), the apical part (22) of the post body (2; 20) is made of a first material having a rigidity essentially the same as a rigidity of the dental implant (5; 50), and the occlusal part (23) of the post body (2; 20) is made of a second material providing flexibility to change between the expanded position and the constricted position and to connect to the dental restoration (4; 40).

10. The abutment arrangement (1; 10) of claim 9, wherein the first material of the apical part (22) of the post body (2; 20) is titanium and/or the second material of the occlusal part (23) of the post body (2; 20) is PEEK, PMMA, Polycarbonate, Nylon, Silicone or a combination thereof.

11. A dental restoration kit comprising the abutment arrangement (1; 10) of any one of the preceding claims and a dental restoration (4; 40), wherein the dental restoration (4; 40) has a cavity (41; 410) configured to receive the mounting portion (231, 232; 2310, 2320, 2330) of the post body (2; 20) of the abutment arrangement (1; 10) to connect to the abutment arrangement (1; 10).

12. The dental restoration kit of claim 11, wherein the cavity (41; 410) of the dental restoration (4; 40) comprises a stem section (411; 4110) and a cave section (412) radially protruding the stem section (411; 4110).

13. The dental restoration kit of claim 12, wherein the cavity (41; 410) of the dental restoration (4; 40) and the mounting portion (231, 232; 2310, 2320, 2330) of the post body (2; 20) are arranged such that the bulge section (232; 2320, 2330) of the mounting portion (231, 232; 2310, 2320, 2330) of the post body (2; 20) can pass through the stem section (411; 4110) of the cavity (41; 410) of the dental restoration (4; 40) when the mounting portion (231, 232; 2310, 2320, 2330) of the post body (2; 20) is in the constricted position, the neck section (231) of the mounting portion (231, 232; 2310, 2320, 2330) of the post body (2; 20) is located in the stem section (411; 4110) of the cavity (41; 410) of the dental restoration (4; 40) when the bulge section (232; 2320, 2330) of the mounting portion (231, 232; 2310, 2320, 2330) of the post body (2; 20) is received in the cave section (412) of the cavity (41; 410) of the dental restoration (4; 40), and the bulge section (232; 2320, 2330) of the mounting portion (231, 232; 2310, 2320, 2330) of the post body (2; 20) cannot pass through the stem section (411; 4110) of the cavity (41; 410) of the dental restoration (4; 40) when the mounting portion (231, 232; 2310, 2320, 2330) of the post body (2; 20) is in the expanded position.

14. The dental restoration kit of claim 12 or 13, wherein the cave section (412) of the cavity (41; 410) of the dental restoration (4; 40) has an inner shape corresponding to an outer shape of the bulge section (232; 2320, 2330) of the mounting portion (231, 232; 2310, 2320, 2330) of the post body (2; 20), and the inner shape of the cave section (412) of the cavity (41; 410) of the dental restoration (4; 40) is smaller than the outer shape of the bulge section (232; 2320, 2330) of the mounting portion (231, 232; 2310, 2320, 2330) of the post body (2; 20).

15. The dental restoration kit of any one of claims 11 to 14, comprising a dental implant (5; 50) with a socket configured to receive the fastening thread section (32; 320) of the screw element (3; 30) of the abutment arrangement (1; 10) to connect to the abutment arrangement (1; 10).

## Patentansprüche

1. Abutment-Anordnung (1; 10) zum Verbinden einer Zahnrestauration (4; 40) mit einem Zahnimplantat (5; 50), mit einem Pfostenkörper (2; 20) und einen Schraubenelement (3; 30),
wobei der Pfostenkörper (2; 20) einen axialen Durchgang (21; 210) aufweist, der sich zwischen einer apikalen Öffnung (212; 2120) und einer okklusalen Öffnung (211; 2110) erstreckt,
der Durchgang (21; 210) des Pfostenkörpers (2; 20) eine Kopfbuchse (213; 2130) und einen Pressabschnitt (214; 2140) an einer apikalen Endseite der Kopfbuchse (213; 2130) aufweist,
das Schraubenelement (3; 30) einen Kopfabschnitt (31; 310) und einen axial vom Kopfabschnitt (31; 310) beabstandeten Befestigungsgewindeabschnitt (32; 320) aufweist, das Schraubenelement (3; 30) dafür konfiguriert ist, im Durchgang (21; 210) des Pfostenkörpers (2; 20) so angeordnet zu werden, dass der Kopfabschnitt (31; 310) in der Kopfbuchse (213; 2130) angeordnet ist, die am Pressabschnitt (214; 2140) anliegt, und so, dass sich das Schraubenelement (3; 30) durch die apikale Öffnung (212; 2120) erstreckt, wodurch der Befestigungsgewindeabschnitt (32; 320) des Schraubenelements (3; 30) zumindest teilweise außerhalb des Pfostenkörpers (2; 20) angeordnet ist, und
der Pfostenkörper (2; 20) einen Montageabschnitt (231, 232; 2320, 2330) aufweist, der zwischen einer expandierten Position und einer zusammengepressten Position biegsam ist und der eine den Durchgang (21; 210) radial begrenzende Innenfläche aufweist,
**dadurch gekennzeichnet, dass**
das Schraubenelement (3; 30) einen ersten Verriegelungsabschnitt (33; 330) aufweist und die Innenfläche des Montageabschnitts (231; 232; 2320; 2330) einen zweiten Verriegelungsabschnitt (232) aufweist, wobei,
wenn das Schraubenelement (3; 30) im Durchgang (21; 210) des Pfostenkörpers (2; 20) angeordnet ist, der erste Verriegelungsabschnitt (33; 330) des Schraubenelements (3; 30) benachbart zum zweiten Verriegelungsabschnitt (232) des Montageabschnitts (231, 232; 2320, 2330) des Pfostenkörpers (2; 20) angeordnet ist, und
der erste Verriegelungsabschnitt (33; 330) des Schraubenelements (3; 30) und der zweite Verriegelungsabschnitt (232) der Innenfläche des Montageabschnitts (231, 232; 2320, 2330) derart konfiguriert sind, dass sie das Schraubenelement (3; 30), den Pfostenkörper (2; 20) oder das Schraubenelement (3; 30) und den Pfostenkörper (2; 20) plastisch verformen, so dass der Montageabschnitt (231, 232; 2320, 2330) des Pfostenkörpers in der expandierten Position verriegelt wird.

2. Abutment-Anordnung (1; 10) nach Anspruch 1, wobei der erste Verriegelungsabschnitt (33; 330) des Schraubenelements (3; 30) als Versatzabschnitt (33; 330) ausgebildet ist, wobei der Versatzabschnitt (33; 330) des Schraubenelements (3; 30) dafür konfiguriert ist, das Material des Montageabschnitts (231, 232; 2320, 2330) des Pfostenkörpers (2; 20) zu verformen, so dass eine Form der Innenfläche des Montageabschnitts (231, 232; 2320, 2330) des Pfostenkörpers (2; 20) verändert wird.

3. Abutment-Anordnung (1; 10) nach Anspruch 1 oder 2, wobei die Innenfläche des Montageabschnitts (231, 232; 2320, 2330) des Pfostenkörpers (2; 20) einen Vorsprung aufweist, der dafür konfiguriert ist, beim Drücken durch den ersten Verriegelungsabschnitt (33; 330) des Schraubenelements (3; 30) umgeformt zu werden.

4. Abutment-Anordnung (1; 10) nach einem der vorhergehenden Ansprüche, wobei der erste Verriegelungsabschnitt (33; 330) des Schraubenelements (3; 30) ein Eindringabschnitt (33) ist, und wobei vorzugsweise der Eindringabschnitt (33) eine Eindringrippe (331) aufweist.

5. Abutment-Anordnung (1; 10) nach einem der vorhergehenden Ansprüche, wobei der erste Verriegelungsabschnitt (33; 330) des Schraubenelements (3; 30) einen Vorsprung (3310) aufweist, der dafür konfiguriert ist, umgeformt zu werden, wenn er durch den zweiten Verriegelungsabschnitt (232) der Innenfläche des Montageabschnitts (231, 232; 2310, 2320, 2330) des Pfostenkörpers (2; 20) gedrückt wird, wobei sich der Vorsprung vorzugsweise spiralförmig entlang einer Außenfläche des Schraubenelements (3; 30) erstreckt.

6. Abutment-Anordnung (1; 10) nach einem der vorhergehenden Ansprüche, wobei der Montageabschnitt (231, 232; 2310, 2320, 2330) des Pfostenkörpers (2; 20) flexible Lamellen (231, 232; 2310, 2320, 2330) aufweist.

7. Abutment-Anordnung (1; 10) nach einem der vorhergehenden Ansprüche, wobei der Montageabschnitt (231, 232; 2310, 2320, 2330) des Pfostenkörpers (2; 20) für eine Schnappverbindung mit der Zahnrestauration (4; 40) konfiguriert ist.

8. Abutment-Anordnung (1; 10) nach Anspruch 7, wobei der Montageabschnitt (231, 232; 2310, 2320, 2330) des Pfostenkörpers (2; 20) einen Halsabschnitt (231) und einen Wulstabschnitt (232; 2320, 2330) aufweist, der radial vom Halsabschnitt (231) hervorsteht, wenn der Montageabschnitt (231, 232; 2310, 2320, 2330) sich in der expandierten Position befindet, und wobei vorzugsweise der Halsabschnitt (231) apikal versetzt vom Wulstabschnitt (232; 2320, 2330) des Montageabschnitts (231, 232; 2310, 2320, 2330) des Pfostenkörpers (2; 20) angeordnet ist.

9. Abutment-Anordnung (1; 10) nach einem der vorhergehenden Ansprüche, wobei der Pfostenkörper (2; 20) einen okklusalen Teil (23) mit der okklusalen Öffnung (211; 2110) des Durchgangs (21; 210) und einen apikalen Teil (22) mit der apikalen Öffnung (212; 2120) des Durchgangs (21; 210) aufweist, wobei der apikale Teil (22) des Pfostenkörpers (2; 20) aus einem ersten Material hergestellt ist, das eine Steifigkeit aufweist, die im Wesentlichen die gleiche ist wie eine Steifigkeit des Zahnimplantats (5; 50), und wobei der okklusale Teil (23) des Pfostenkörpers (2; 20) aus einem zweiten Material hergestellt ist, das Flexibilität bietet, um zwischen der expandierten Position und der zusammengepressten Position zu wechseln und eine Verbindung mit der Zahnrestauration (4; 40) herzustellen.

10. Abutment-Anordnung (1; 10) nach Anspruch 9, wobei das erste Material des apikalen Teils (22) des Pfostenkörpers (2; 20) Titan ist und/oder das zweite Material des okklusalen Teils (23) des Pfostenkörpers (2; 20) PEEK, PMMA, Polycarbonat, Nylon, Silikon oder eine Kombination davon ist.

11. Zahnrestaurations-Kit, mit der Abutment-Anordnung (1; 10) nach einem der vorhergehenden Ansprüche und einer Zahnrestauration (4; 40), wobei die Zahnrestauration (4; 40) einen Hohlraum (41; 410) aufweist, der dafür konfiguriert ist, den Montageabschnitt (231, 232; 2310, 2320, 2330) des Pfostenkörpers (2; 20) der Abutment-Anordnung (1; 10) aufzunehmen, um eine Verbindung mit der Abutment-Anordnung (1; 10) herzustellen.

12. Zahnrestaurations-Kit nach Anspruch 11, wobei der Hohlraum (41; 410) der Zahnrestauration (4; 40) einen Schaftabschnitt (411; 4110) und einen vom Schaftabschnitt (411; 4110) radial hervorstehenden Hohlraumabschnitt (412) aufweist.

13. Zahnrestaurations-Kit nach Anspruch 12, wobei der Hohlraum (41; 410) der Zahnrestauration (4; 40) und der Montageabschnitt (231, 232; 2310, 2320, 2330) des Pfostenkörpers (2; 20) derart angeordnet sind, dass der Wulstabschnitt (232; 2320, 2330) des Montageabschnitts (231, 232; 2310, 2320, 2330) des Pfostenkörpers (2; 20) sich durch den Schaftabschnitt (411; 4110) des Hohlraums (41; 410) der Zahnrestauration (4; 40) erstrecken kann, wenn der Montageabschnitt (231, 232; 2310, 2320, 2330) des Pfostenkörpers (2; 20) sich in der zusammengepressten Position befindet, und wobei der Halsabschnitt (231) des Montageabschnitts (231, 232; 2310, 2320, 2330) des Pfostenkörpers (2; 20) im Schaftabschnitt (411; 4110) des Hohlraums (41; 410) der Zahnrestauration (4; 40) angeordnet ist, wenn der Wulstabschnitt (232; 2320, 2330) des Montageabschnitts (231, 232; 2310, 2320, 2330) des Pfostenkörpers (2; 20) im Hohlraumabschnitt (412) des Hohlraums (41; 410) der Zahnrestauration (4; 40) aufgenommen ist, und wobei der Wulstabschnitt (232; 2320, 2330) des Montageabschnitts (231, 232; 2310, 2320, 2330) des Pfostenkörpers (2; 20) sich nicht durch den Schaftabschnitt (411; 4110) des Hohlraums (41; 410) der Zahnrestauration (4; 40) erstrecken kann, wenn sich der Montageabschnitt (231, 232; 2310, 2320, 2330) des Pfostenkörpers (2; 20) in der expandierten Position befindet.

14. Zahnrestaurations-Kit nach Anspruch 12 oder 13, wobei der Hohlraumabschnitt (412) des Hohlraums (41; 410) der Zahnrestauration (4; 40) eine innere Form aufweist, die einer äußeren Form des Wulstabschnitts (232; 2320, 2330) des Montageabschnitts (231, 232; 2310, 2320, 2330) des Pfostenkörpers (2; 20) entspricht, und wobei die innere Form des Hohlraumabschnitts (412) des Hohlraums (41; 410) der Zahnrestauration (4; 40) kleiner ist als die äußere Form des Wulstabschnitts (232; 2320, 2330) des Montageabschnitts (231, 232; 2310, 2320, 2330) des Pfostenkörpers (2; 20).

15. Zahnrestaurations-Kit nach einem der Ansprüche 11 bis 14, mit einem Zahnimplantat (5; 50) mit einem Sockel, der dafür konfiguriert ist, den Befestigungsgewindeabschnitt (32; 320) des Schraubenelements (3; 30) der Abutment-Anordnung (1; 10) aufzunehmen, um eine Verbindung mit der Abutment-Anordnung (1; 10) herzustellen.

## Revendications

1. Agencement de butée (1 ; 10) pour le raccordement d'une restauration dentaire (4 ; 40) à une prothèse dentaire (5 ; 50), comprenant un corps de tige (2 ; 20) et un élément de vis (3 ; 30), dans lequel
le corps de tige (2 ; 20) a un passage axial (21 ; 210) s'étendant entre une ouverture apicale (212 ; 2120) et une ouverture occlusale (211 ; 2110) ;
le passage (21 ; 210) du corps de tige (2; 20) a une douille de tête (213 ; 2130) et une section de presse (214 ; 2140) au niveau d'un côté d'extrémité apicale de la douille de tête (213 ; 2130) ;
l'élément de vis (3 ; 30) comprend une section de tête (31 ; 310) et une section de filetage de fixation (32 ; 320) distante de manière axiale de la section de tête (31 ; 310) ; l'élément de vis (3 ; 30) est conçu pour être agencé dans le passage (21 ; 210) du corps de tige (2 ; 20) de telle sorte que la section de tête (31 ; 310) est positionnée dans la douille de tête (213 ; 2130) pour venir en butée contre la section de presse (214 ; 2140), et de telle sorte que l'élément de vis (3 ; 30) s'étend à travers l'ouverture apicale (212 ; 2120) moyennant quoi la section de filetage de fixation (32 ; 320) de l'élément de vis (3 ; 30) est au moins partiellement positionnée hors du corps de tige (2 ; 20) ; et
le corps de tige (2 ; 20) a une partie de montage (231, 232 ; 2320, 2330) qui est flexible entre une position étendue et une position rétractée, et qui a une face interne limitant de manière radiale le passage (21 ; 210),
**caractérisé en ce que**
l'élément de vis (3 ; 30) a une première section de verrouillage (33 ; 330) et la face interne de la partie de montage (231 ; 232 ; 2320 ; 2330) a une seconde section de verrouillage (232), dans lequel,
lorsque l'élément de vis (3 ; 30) est agencé dans le passage (21 ; 210) du corps de tige (2 ; 20), la première section de verrouillage (33 ; 330) de l'élément de vis (3 ; 30) est positionnée de manière adjacente à la seconde section de verrouillage (232) de la partie de montage (231, 232 ; 2320, 2330) du corps de tige (2 ; 20), et
la première section de verrouillage (33; 330) de l'élément de vis (3 ; 30) et la seconde section de verrouillage (232) de la face interne de la partie de montage (231, 232 ; 2320, 2330) sont conçues pour déformer de manière plastique l'élément de vis (3 ; 30), le corps de tige (2 ; 20) ou l'élément de vis (3; 30) et le corps de tige (2 ; 20) de telle sorte que la partie de montage (231, 232 ; 2320, 2330) du corps de tige est verrouillée en position étendue.

2. Agencement de butée (1 ; 10) selon la revendication 1, dans lequel la première section de verrouillage (33 ; 330) de l'élément de vis (3 ; 30) joue le rôle de section de déplacement (33 ; 330), dans lequel la section de déplacement (33 ; 330) de l'élément de vis (3 ; 30) est conçue pour déformer le matériau de la partie de montage (231, 232 ; 2320, 2330) du corps de tige (2 ; 20) de telle sorte qu'une forme de la face interne de la partie de montage (231, 232 ; 2320, 2330) du corps de tige (2 ; 20) est modifiée.

3. Agencement de butée (1 ; 10) selon la revendication 1 ou 2, dans lequel la face interne de la partie de montage (231, 232 ; 2320, 2330) du corps de tige (2 ; 20) a une saillie conçue pour être reformée lorsqu'elle est pressée par la première section de verrouillage (33 ; 330) de l'élément de vis (3 ; 30).

4. Agencement de butée (1 ; 10) selon l'une quelconque des revendications précédentes, dans lequel la première section de verrouillage (33 ; 330) de l'élément de vis (3 ; 30) est une section d'invasion (33), et, préférentiellement, la section d'invasion (33) comprend une nervure d'invasion (331).

5. Agencement de butée (1 ; 10) selon l'une quelconque des revendications précédentes, dans lequel la première section de verrouillage (33 ; 330) de l'élément de vis (3 ; 30) a une saillie (3310) conçue pour être reformée lorsqu'elle est pressée par la seconde section de verrouillage (232) de la face interne de la partie de montage (231, 232 ; 2310, 2320, 2330) du corps de tige (2 ; 20), et, préférentiellement, la saillie s'étend en spirale le long d'une face externe de l'élément de vis (3 ; 30).

6. Agencement de butée (1 ; 10) selon l'une quelconque des revendications précédentes, dans lequel la partie de montage (231, 232 ; 2310, 2320, 2330) du corps de tige (2 ; 20) comprend des lamelles souples (231, 232 ; 2310, 2320, 2330).

7. Agencement de butée (1 ; 10) selon l'une quelconque des revendications précédentes, dans lequel la partie de montage (231, 232 ; 2310, 2320, 2330) du corps de tige (2 ; 20) est conçue pour un raccordement par encliquetage à la restauration dentaire (4 ; 40).

8. Agencement de butée (1 ; 10) selon la revendication 7, dans lequel la partie de montage (231, 232 ; 2310, 2320, 2330) du corps de tige (2 ; 20) a une section de cou (231) et une section de renflement (232 ; 2320, 2330) faisant saillie de manière radiale de la section de cou (231) lorsque la partie de montage (231, 232 ; 2310, 2320, 2330) est en position étendue, et, préférentiellement, la section de cou (231) est décalée de manière apicale par rapport à la section de renflement (232 ; 2320, 2330) de la partie de montage (231, 232 ; 2310, 2320, 2330) du corps de tige (2 ; 20).

9. Agencement de butée (1 ; 10) selon l'une quelconque des revendications précédentes, dans lequel le corps de tige (2 ; 20) a une pièce occlusale (23) ayant l'ouverture occlusale (211 ; 2110) du passage (21 ; 210) et une pièce apicale (22) ayant l'ouverture apicale (212; 2120) du passage (21 ; 210), la pièce apicale (22) du corps de tige (2 ; 20) est fabriquée en un premier matériau ayant une rigidité essentiellement identique à une rigidité de la prothèse dentaire (5 ; 50), et la pièce occlusale (23) du corps de tige (2 ; 20) est fabriquée en un second matériau fournissant une souplesse pour changer de position entre la position étendue et la position rétractée et pour se raccorder à la restauration dentaire (4 ; 40).

10. Agencement de butée (1 ; 10) selon la revendication 9, dans lequel le premier matériau de la pièce apicale (22) du corps de tige (2 ; 20) est le titane et/ou le second matériau de la pièce occlusale (23) du corps de tige (2 ; 20) est le PEEK, le PMMA, le polycarbonate, le nylon, la silicone ou une combinaison de ceux-ci.

11. Kit de restauration dentaire comprenant l'agencement de butée (1 ; 10) selon l'une quelconque des revendications précédentes et une restauration dentaire (4 ; 40), dans lequel la restauration dentaire (4 ; 40) a une cavité (41 ; 410) conçue pour recevoir la partie de montage (231, 232 ; 2310, 2320, 2330) du corps de tige (2 ; 20) de l'agencement de butée (1 ; 10) pour se raccorder à l'agencement de butée (1 ; 10).

12. Kit de restauration dentaire selon la revendication 11, dans lequel la cavité (41 ; 410) de la restauration dentaire (4 ; 40) comprend une section de racine (411; 4110) et une section de creux (412) faisant saillie de manière radiale de la section de racine (411 ; 4110).

13. Kit de restauration dentaire selon la revendication 12, dans lequel la cavité (41 ; 410) de la restauration dentaire (4 ; 40) et la partie de montage (231, 232 ; 2310, 2320, 2330) du corps de tige (2 ; 20) sont agencées de telle sorte que la section de renflement (232 ; 2320, 2330) de la partie de montage (231, 232 ; 2310, 2320, 2330) du corps de tige (2 ; 20) peut passer à travers la section de racine (411 ; 4110) de la cavité (41 ; 410) de la restauration dentaire (4 ; 40) lorsque la partie de montage (231, 232 ; 2310, 2320, 2330) du corps de tige (2 ; 20) est dans la position rétractée, la section de cou (231) de la partie de montage (231, 232 ; 2310, 2320, 2330) du corps de tige (2 ; 20) est située dans la section de racine (411 ; 4110) de la cavité (41 ; 410) de la restauration dentaire (4 ; 40) lorsque la section de renflement (232 ; 2320, 2330) de la partie de montage (231, 232 ; 2310, 2320, 2330) du corps de tige (2 ; 20) est reçue dans la section de creux (412) de la cavité (41 ; 410) de la restauration dentaire (4 ; 40), et la section de renflement (232 ; 2320, 2330) de la partie de montage (231, 232 ; 2310, 2320, 2330) du corps de tige (2 ; 20) ne peut pas passer à travers la section de racine (411 ; 4110) de la cavité (41 ; 410) de la restauration dentaire (4 ; 40) lorsque la partie de montage (231, 232 ; 2310, 2320, 2330) du corps de tige (2 ; 20) est dans la position étendue.

14. Kit de restauration dentaire selon la revendication 12 ou 13, dans lequel la section de creux (412) de la cavité (41 ; 410) de la restauration dentaire (4 ; 40) a une forme interne correspondant à une forme externe de la section de renflement (232 ; 2320, 2330) de la partie de montage (231, 232 ; 2310, 2320, 2330) du corps de tige (2 ; 20), et la forme interne de la section de creux (412) de la cavité (41; 410) de la restauration dentaire (4 ; 40) est plus petite que la forme externe de la section de renflement (232 ; 2320, 2330) de la partie de montage (231, 232 ; 2310, 2320, 2330) du corps de tige (2 ; 20).

15. Kit de restauration dentaire selon l'une quelconque des revendications 11 à 14, comprenant une prothèse dentaire (5 ; 50) avec une douille conçue pour recevoir la section de filetage de fixation (32 ; 320) de l'élément de vis (3 ; 30) de l'agencement de butée (1 ; 10) pour se raccorder à l'agencement de butée (1 ; 10).
